# EUROPÄISCHE PATENTSCHRIFT

(11) **EP 1 797 411 B1**
(45) Veröffentlichungstag und Bekanntmachung des Hinweises auf die Patenterteilung: **15.11.2017**
(21) Anmeldenummer: 05789479.2
(22) Anmeldetag: 09.09.2005
(51) Int. Cl.: G01N 27/407, G01N 15/06

(54) **PARTIKELSENSOR UND VERFAHREN ZUM BETRIEB DESSELBEN**
PARTICLE SENSOR AND METHOD FOR OPERATING THE SAME
CAPTEUR DE PARTICULES ET PROCEDE D'UTILISATION

(30) Priorität: 30.09.2004 DE 102004047465; 01.04.2005 DE 102005015103
(43) Veröffentlichungstag der Anmeldung: 20.06.2007
(73) Patentinhaber: ROBERT BOSCH GMBH, 70442 Stuttgart (DE)
(72) Erfinder: GUENSCHEL, Harald, 96161 Gerach (DE); GLANZ, Uwe, 71679 Asperg (DE); ZIMMERMANN, Stefan, 76327 Pfinztal (DE); SCHWEGLER, Leonore, 70374 Stuttgart (DE); SINDEL, Jürgen, 71665 Vaihingen/Enz (DE)
(86) Internationale Anmeldenummer: PCT/EP2005/054475
(87) Internationale Veröffentlichungsnummer: WO 2006/034951

(56) Entgegenhaltungen:
- DE-A1- 4 236 711
- DE-A1- 10 128 869
- DE-A1- 10 244 702
- DE-A1- 10 322 427
- DE-A1- 19 853 841
- GB-A- 1 495 699
- US-A- 4 307 061

## Beschreibung

Die Erfindung geht aus von einem Sensor zur Bestimmung von Partikeln in Gasgemischen, insbesondere Rußsensor, und einem Verfahren zum Betrieb desselben gemäß der im Oberbegriff der unabhängigen Ansprüche definierten Art.

### Stand der Technik

Im Zuge einer sich verschärfenden Umweltgesetzgebung erlangen zunehmend Abgasnachbehandlungssysteme Bedeutung, die die Filtration bzw. Eliminierung von in Verbrennungsabgasen existierenden Rußpartikeln ermöglichen. Um die Funktionstüchtigkeit derartiger Abgasnachbehandlungssysteme zu überprüfen bzw. zu überwachen, werden Sensoren benötigt, mit denen auch im Langzeitbetrieb eine genaue Ermittlung der aktuell im Verbrennungsabgas vorliegenden Partikelkonzentration ermöglicht werden kann. Darüber hinaus soll mittels derartiger Sensoren eine Beladungsprognose von beispielsweise in einem Abgassystem vorgesehenen Dieselpartikelfiltern durchführbar sein, um eine hohe Systemsicherheit zu erreichen und dadurch kostengünstigere Filtermaterialien einsetzen zu können.

Aus der DE 102 44 702 A1 ist ein Sensor zur Detektion von Stoffen in einem Fluidstrom bekannt, der zwei voneinander beabstandete Messelektroden umfasst, die dem zu untersuchenden Verbrennungsabgas ausgesetzt sind. Eine der Elektroden ist mit einer Hochspannungsquelle verbunden, sodass an der Elektrode eine Spannung zwischen 1 und 10 kV anliegt. Zwischen den Messelektroden kommt es dabei zu dielektrisch behinderten Entladungen, wobei der zwischen den Messelektroden auftretende Strom mit der Anzahl der im Gasraum zwischen den Messelektroden vorhandenen Partikel korreliert ist. Nachteilig an dieser Art von Partikelsensoren ist deren relativ komplexer und somit kostenintensiver Aufbau.
Aufgabe der vorliegenden Erfindung ist es, einen Sensor zur Bestimmung der Konzentration von Partikeln in Gasgemischen bereitzustellen, der eine hohe Genauigkeit der erhaltenen Messsignale zeigt und dennoch kostengünstig hergestellt werden kann.
Weitere Sensoren sind bekannt aus der DE 42 36 711 A1, US4 307 061 A, DE 19853 841 A1 und der DE 101 56 946 A1. DE 103 22 427 offenbart einen Russensor mit zwei Sauerstoffpumpzellen. Die Diffusionsbarrieren verstopfen durch Russablagerung, was zu einer Veränderung der Differenz der Pumpstromdichten und damit der gemessenen Signalamplituden der beiden Elektrodensysteme der Sauerstoffpumpzellen führt. Die Geschwindigkeit dieser Änderung und der Betrag der Signalamplitudendifferenzen dienen als Maß für die Konzentration von Teilchen in dem betreffenden Abgasstrom. Zusätzliche Elektroden sind auf dem Festelektrolyten angeordnet, an die eine Hochspannung anlegbar ist, um durch Generierung von Ozon die verstopften Diffusionsbarrieren des Sensors zu reinigen. Vorteile der Erfindung Der Sensor bzw. das Verfahren mit den kennzeichnenden Merkmalen der unabhängigen Ansprüche haben den Vorteil, dass sie die der Erfindung zugrundeliegende Aufgabe in vorteilhafter Weise lösen. Dies beruht insbesondere auf dem einfachen Aufbau des Sensors und auf der Verwendung robuster Bauteile, die sich im Bereich keramischer Sauerstoffsensoren bzw. Zündkerzen bewährt haben. Zum Schutz vor korrosiven Abgasbestandteilen weist der Sensor ein metallisches Gehäuse auf, das jedoch den Zutritt der zu bestimmenden Partikel gestattet. Ein einfacher Aufbau des Sensors resultiert aus der Verwendung des metallischen Gehäuses als Messelektrode bzw. als Träger der Messelektrode.
Weitere vorteilhafte Ausführungsformen des vorliegenden Sensors ergeben sich aus den Unteransprüchen.
Erfindungsgemäß ist eine weitere Messelektrode zum Schutz vor Verrußung zumindest weitgehend in den keramischen Sensorkörper des Sensors integriert ist. Dies erhöht die Langzeitstabilität und Messgenauigkeit des vorliegenden Sensors erheblich.
Es ist besonders vorteilhaft, wenn der Sensorkörper rotationssymmetrisch ausgeführt ist, da das Gasgemisch in diesem Fall unabhängig von der Positionierung des Sensors relativ zur Strömung des Gasgemischs identische Zutrittsmöglichkeiten zu den Messelektroden des Sensors hat.

In einer besonders vorteilhaften Ausführungsform ist der Sensor in Form einer einer Lambdasonde ausgeführt, da auf diese Weise auf bewährte Standardkomponenten bei der Herstellung des Sensors zurückgegriffen werden kann. Bei Ausführung als Lambdasonde wird der Sensor vorteilhafterweise in einem ersten Zeitraum als Partikelsensor und in einem zweiten Zeitraum als Lambdasonde betrieben.

### Zeichnung

Ein Ausführungsbeispiel des erfindungsgemäßen Sensors ist in der Zeichnung 1 dargestellt und nachfolgend Beschreibung näher erläutert. Die Figuren 2 bis 5 zeigen keine Ausführungsformen der Erfindung.
Figur 1 einen Längsschnitt durch einen Sensor auf der Basis von Baukomponenten einer Sauerstoffsonde gemäß einem ersten Ausführungsbeispiel,
Figur 2 einen Längsschnitt durch einen Sensor auf der Basis von Baukomponenten einer Sauerstoffsonde, der kein Ausführungsbeispiel der Erfindung ist.
Figur 3 einen Längsschnitt durch einen Sensor auf der Basis von Baukomponenten einer Zündkerze, der kein Ausführungsbeispiel der Erfindung ist.
Figur 4 einen Längsschnitt durch einen Sensor auf der Basis von Baukomponenten einer Zündkerze, der kein Ausführungsbeispiel der Erfindung ist.
Figur 5 einen Längsschnitt durch einen Sensor auf der Basis von Baukomponenten einer Zündkerze, der kein Ausführungsbeispiel der Erfindung ist.

### Beschreibung der Ausführungsbeispiele

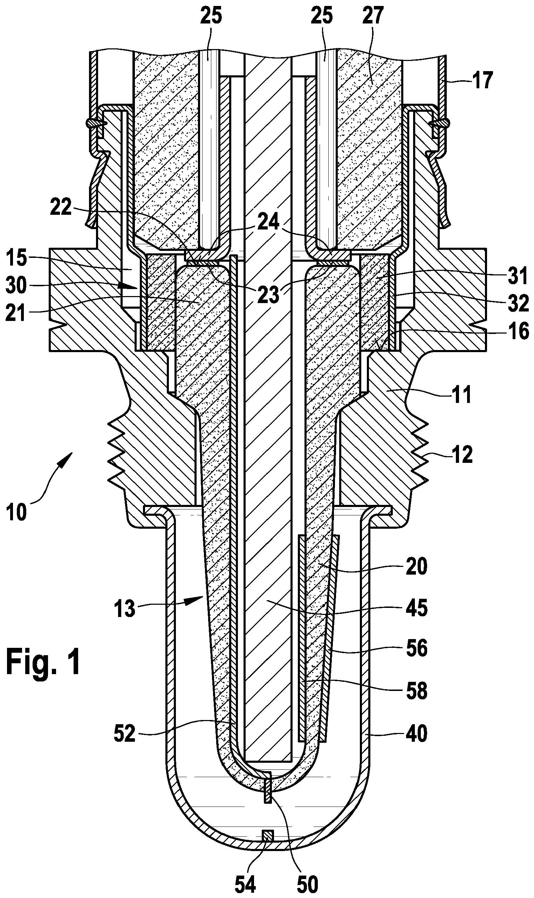

In Figur 1 ist ein prinzipieller Aufbau einer ersten Ausführungsform der vorliegenden Erfindung dargestellt. Mit 10 ist ein Sensor zur Bestimmung von Partikeln in einem den Sensor umgebenden Gasgemisch bezeichnet. Der Sensor 10 weist ein metallisches Gehäuse 11 mit einem Gewinde 12 als Befestigungsmittel für den Einbau in ein nicht dargestelltes Abgasrohr auf, sowie eine Sensorkeramik 13, die vorzugsweise rotationssymmetrisch ausgeführt ist. Zwischen Sensorkeramik 13 und Gehäuse 11 ist eine Dichtanordnung 30 vorgesehen, welche die Sensorkeramik 13 gasdicht und elektrisch isolierend mit dem Gehäuse 11 verbindet. Die Dichtanordnung 30 umfasst einen keramischen Isolierring 31 aus einem elektrisch isolierenden Material und eine metallische Hülse 32.

Das Gehäuse 11 hat eine Längsbohrung 15, die stufenförmig ausgebildet ist und beispielsweise eine Ringfläche 16 aufweist, auf der die Sensorkeramik 13 aufsitzt. Das anschlussseitige Ende des Gehäuses 11 ist von einer Umkapselung 17 umgeben, in der nicht dargestellte, anschlussseitige Bauelemente untergebracht sind.

Die Sensorkeramik 13 umfasst einen rohrförmigen Keramikkörper 20, dessen messgasseitiger Endabschnitt verschlossen ist. Am anschlussseitigen Endabschnitt ist am Keramikkörper 20 ein wulstförmiger Kopf 21 mit einer ringförmigen Stirnfläche 22 angeformt. Der Keramikkörper 20 ist vorzugsweise aus einem sauerstoffionenleitenden Festelektrolytmaterial, wie beispielsweise mit Y₂O₃ stabilisiertem oder teilstabilisiertem ZrO₂ ausgeführt; zusätzlich können Zusätze von Aluminiumoxid vorgesehen sein.

Die messgasseitige, aus der Längsbohrung 15 herausragende Sensorkeramik 13 ist mit Abstand von einem Schutzrohr 40 umgeben, welches für den Ein- beziehungsweise Austritt des Gasgemischs vorzugsweise mehrere, beispielsweise symmetrisch zur Mittelachse des Schutzrohrs 40 angeordnete, nicht dargestellte Öffnungen besitzt. Das den messgasseitigen Teil des Keramikkörpers 20 umgebende Schutzrohr 40 kann alternativ als Doppelschutzrohr ausgeführt werden mit einer äußeren Zylinderhülse und einer inneren Zylinderhülse. Zwischen der äußeren Zylinderhülse und der inneren Zylinderhülse ist dann ein umlaufender Spalt vorhanden. Die äußere Zylinderhülse weist mehrere, nicht dargestellte, insbesondere dem anströmenden Gasgemisch zugewandte, vorzugsweise axial oder radial verteilte Gaseinlässe auf. Die innere Zylinderhülse weist ebenfalls mehrere, radial und/oder axial verteilte innere Gaseinlässe auf. Diese Anordnung ermöglicht dem Gasgemisch den Zutritt zu dem sensitiven Bereich des Sensors 10 unter Vermeidung einer turbulenten Strömungsführung des Gasgemischs in der unmittelbaren Umgebung des Keramikkörpers 20.

In den Innenraum der Sensorkeramik 13 ist beispielsweise ein stabförmiges Heizelement 45 eingeführt, das der zumindest zeitweiligen Beheizung des Sensors 10 auf eine Temperatur von beispielsweise 600 - 700 °C dient, bei der möglicherweise auf der Oberfläche des Keramikkörpers 20 abgelagerter Ruß abgebrannt wird. In das keramische Heizelement 45 ist ein nicht dargestellter elektrischer Widerstand integriert. Als elektrischer Widerstand wird vorzugsweise eine Widerstandsleiterbahn aus einem Cermet-Material eingesetzt. Dabei handelt es sich vorzugsweise um eine Mischung eines Metalls, wie beispielsweise Platin, mit keramischen Anteilen, wie beispielsweise Aluminiumoxid. Die Widerstandsleiterbahn ist vorzugsweise in Form eines Mäanders ausgeführt und weist an beiden Enden nicht dargestellte elektrische Anschlüsse auf. Durch Anlegen einer entsprechenden Heizspannung an die Anschlüsse der Widerstandsleiterbahn kann die Heizleistung des Heizelementes 45 entsprechend reguliert werden.

Als keramisches Material zur elektrischen Isolierung des Heizelementes 45 wird vorzugsweise ein bariumhaltiges Aluminiumoxid verwendet, da eine derartige Isolierung über einen langen Zeitraum einen weitgehend konstant hohen elektrischen Widerstand aufweist.

Auf der dem Gasgemisch ausgesetzten Außenseite des Keramikkörpers 20 ist eine erste Messelektrode 50 vorzugsweise aus einem erosionsfesten Material wie bspw. einem Platin-Cermet vorgesehen. Eine zweite Messelektrode, die als Gegenelektrode zur ersten Messelektrode 50 dient, wird durch das Schutzrohr 40 gebildet. Zur elektrischen Kontaktierung der ersten Messelektrode 50 ist vorzugsweise auf der Innenseite des Keramikkörpers 20 eine Zuleitung 52 aufgebracht. Alternativ kann die Zuleitung 52 in das keramische Material des Keramikkörpers 20 eingepresst und mit diesem versintert werden, sodass die Zuleitung 52 im wesentlichen von allen Seiten von keramischem Material des Keramikkörpers 20 bedeckt ist. Gemäß einer weiteren Alternative kann die Messelektrode 50 als Verlängerung der Zuleitung 52 als Draht ausgeführt sein. Das Schutzrohr 40 ist ebenfalls über eine nicht dargestellte Zuleitung elektrisch kontaktiert.

Während des Betriebs des Sensors 10 wird an die erste Messelektrode 50 und das Schutzrohr 40 eine Hochspannung angelegt. Auf diese Weise kommt es zu elektrischen Entladungen zwischen der ersten Messelektrode 50 und dem Schutzrohr 40. Wird die durch die erste Messelektrode 50 und das Schutzrohr 40 gebildete Entladungsstrecke beispielsweise von Rußpartikeln durchflogen, so verändert dies die Überschlagfrequenz der elektrischen Entladung. Die Zahl der erfolgten Überschläge pro Zeiteinheit kann durch eine nicht dargestellte Auswertungsvorrichtung erfasst und mit einer Partikelkonzentration korreliert werden.

Um eine gut definierte Entladungsstrecke zu erhalten, weist das Schutzrohr 40 vorzugsweise auf seiner der Messelektrode 50 gegenüberliegenden Fläche ein Metallplättchen 54 in Form eines Fangkorbs für Überschläge auf.

Der Sensor 10 kann nicht nur zur Bestimmung der Konzentration von Partikeln in Gasgemischen herangezogen werden, sondern kann zusätzlich der Bestimmung von gasförmigen Bestandteilen des Gasgemischs dienen.

Dazu weist der Sensor 10 auf der dem Schutzrohr 40 zugewandten Großfläche des Keramikkörpers 20 eine zweite Messelektrode 56 auf. Als Gegenelektrode zur zweiten Messelektrode 56 ist auf der Innenseite des Keramikkörpers 20, beabstandet zur Zuleitung 52 bzw. ersten Messelektrode 50 eine einem Referenzgas, zum Beispiel Luft, ausgesetzte Referenzelektrode 58 angeordnet. Die zweite Messelektrode 56 und die Referenzelektrode 58 sind jeweils mit ebenfalls nicht näher dargestellten Leiterbahnen zu jeweils auf der Stirnfläche 22 angeordneten Elektrodenkontakten 23 geführt. Auf den Elektrodenkontakten 23 liegen jeweils Kontaktteile 24 auf, die jeweils mit einem Anschlusskabel 25 kontaktiert sind. Die Anschlusskabel 25 werden durch ein nicht dargestelltes Dichtungsteil aus der messgasfernen Umkapselung 17 herausgeführt und an die Auswertungsvorrichtung bzw. ein Steuergerät angeschlossen. In der Längsbohrung 15 des Gehäuses 11 ist ferner eine keramische Isolierhülse 27 angeordnet, die auf die Kontaktteile 24 drückt.

Die zweite Messelektrode 56 bildet zusammen mit der Referenzelektrode 58 eine elektrochemische Nernstzelle. Diese beruht auf der Bestimmung der durch die unterschiedlichen Sauerstoffgehalte im Gasgemisch bzw. Referenzgasatmosphäre bedingte Potenzialdifferenz in Form einer messbaren elektrischen Spannung.

Die Bestimmung des Sauerstoffgehaltes im Gasgemisch erfolgt vorzugsweise alternierend zur Bestimmung der Partikelkonzentration im Gasgemisch. Dabei wird in einem ersten Zeitraum eine Hochspannung an die erste Messelektrode 50 bzw. das Schutzrohr 40 angelegt und so die Konzentration an Partikeln im Gasgemisch bestimmt, und in einem zweiten Zeitraum die an die erste Messelektrode 50 bzw. das Schutzrohr 40 angelegte Hochspannung ausgeschaltet und die zwischen der zweiten Messelektrode 56 und der Referenzelektrode 58 sich ausbildende Spannung bestimmt. Auf diese Weise wird eine Einkopplung der an die erste Messelektrode 50 bzw. das Schutzrohr 40 angelegten Hochspannung in das Messsignal der durch die Elektroden 56, 58 gebildeten Nernstzelle vermieden.

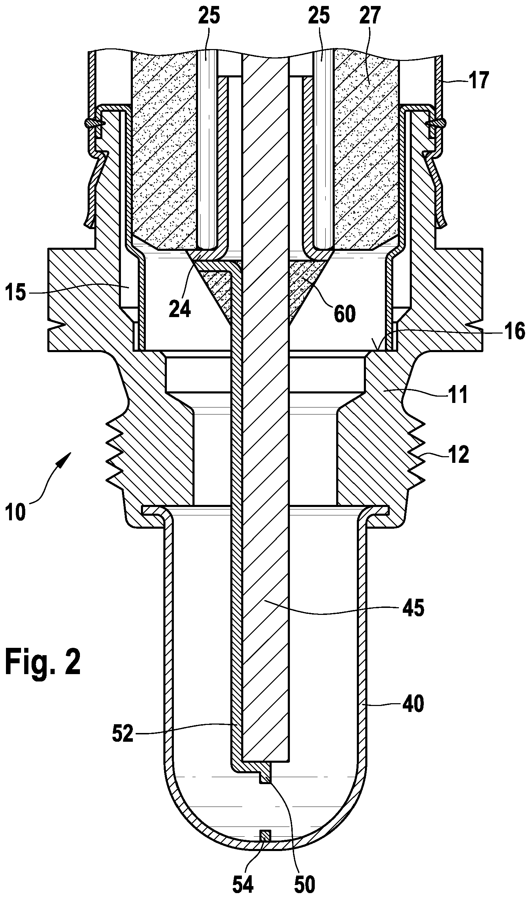

In Figur 2 ist eine zweite Ausführungsform eines Sensors zu Bestimmung von Partikeln in Gasgemischen dargestellt. Dabei bezeichnen gleiche Bezugszeichen gleiche Bauteilkomponenten wie in Figur 1.

Der in Figur 2 abgebildete Sensor ist wie der in Figur 1 dargestellte auf der Basis von Baukomponenten ausgeführt, wie sie sonst bei Sauerstoffsensoren Anwendung finden. Dabei wird bei diesem Sensor auf die Verwendung einer fingerförmigen, keramischen Sensorkeramik 13 verzichtet. Dies vereinfacht den Aufbau des Sensors wesentlich.

Anstatt dessen ist die Messelektrode 50 auf einer Außenfläche des Heizelementes 45 positioniert und ist durch die Zuleitung 52 elektrisch kontaktiert. Dabei wird die Messelektrode 50 und die Zuleitung 52 während der Herstellung des Sensors vorzugsweise durch Tamponoder Transferdruck auf das Heizelement 45 aufgebracht und beispielsweise mit einer nicht dargestellten Abdeckung aus Aluminiumoxid versehen. Alternativ kann die Zuleitung 52 der Messelektrode 50 auch in das keramische Material des Heizelementes 45 integriert werden. Das Heizelement 45 ist anschlussseitig gegenüber der zu bestimmenden Gasatmosphäre vorzugsweise durch eine keramische Abdichtung 60 in Form einer Packung aus Steatitpulver gasdicht abgedichtet.

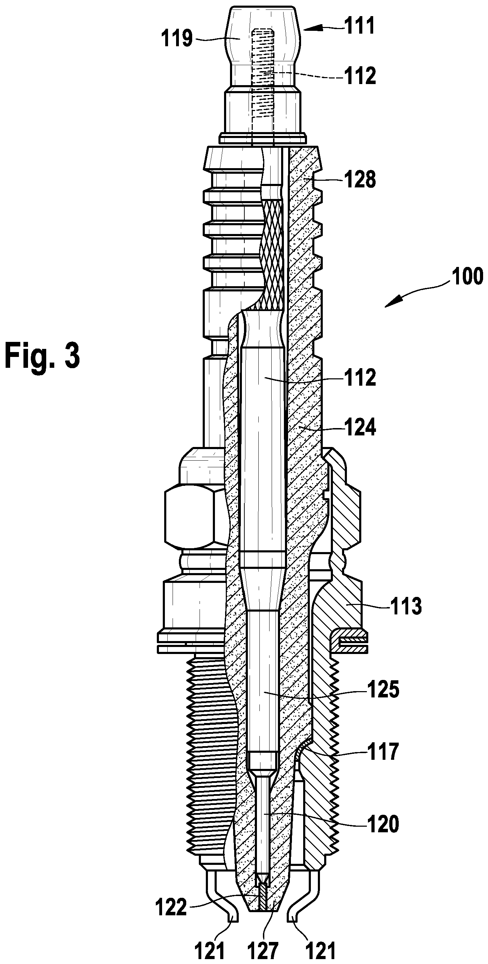

In Figur 3 ist ein Sensor ist in Form einer Zündkerze ausgeführt. Die Zündkerze 100 umfasst ein rohrförmiges metallisches Gehäuse 113, in dem ein keramischer Isolator 124 angeordnet ist. Der Isolator 124 umhüllt an seinem brennraumseitigen Ende 127 eine Mittelelektrode 122 und isoliert sie elektrisch gegenüber dem Gehäuse 113. Er enthält einen Kontaktstift 120, der der Übertragung der Spannung auf die Mittelelektrode 122 dient, und an seinem anschlussseitigen Ende 128 ein Anschlussmittel 111. Das Anschlussmittel 111 gewährleistet die elektrische Kontaktierung der Mittelelektrode 122 an eine externe, nicht dargestellte Spannungsversorgung. Es umfasst im wesentlichen einen Anschlussbolzen 112, der zusätzlich an seinem anschlussseitigen Ende mit einem Gewinde und einer Anschlussmutter 119 versehen ist. Zwischen dem Anschlussmittel 111 und dem Kontaktstift 120 befindet sich ein Abbrandwiderstand 125, der aus einem elektrisch leitenden Glas besteht und der sowohl eine mechanische Verankerung der im Isolator 124 angeordneten Zündkerzenkomponenten bewirkt als auch einen gasdichten Abschluss gegenüber dem Verbrennungsdruck darstellt. Zwischen dem Isolator 124 und dem Gehäuse 113 befindet sich ein innerer Dichtsitz 117, der das Innere der Zündkerze 100 gegenüber dem Verbrennungsraum abdichtet.

Am Gehäuse 113 sind bis zu vier Masseelektroden 121 angeschweißt. Zwischen ihnen und der Mittelelektrode 122 wird wird eine Hochspannung angelegt. Die Bestimmung der Konzentration an Partikeln im Gasgemisch erfolgt dann wie bei den in Figur 1 und 2 dargestellten und beschriebenen Sensoren.

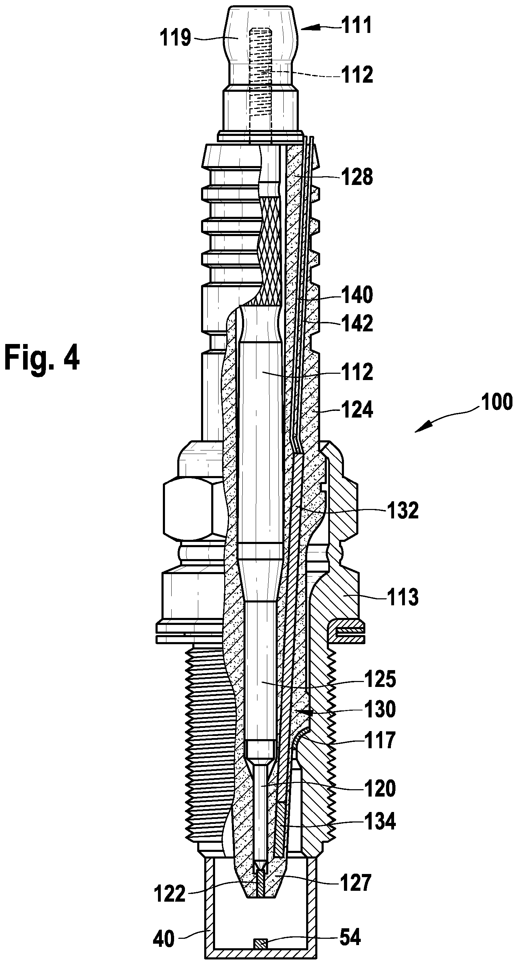

In Figur 4 ist ein weiterer Sensors dargestellt. Dabei bezeichnen gleiche Bezugszeichen gleiche Bauteilkomponenten wie in Figur 3.

Dieser Sensor weist zusätzlich ein Heizelement 130 zur Beheizung insbesondere der Mittelelektrode 122 auf, sodass diese von sich anlagerndem Ruß befreit werden kann. Das Heizelement 130 ist in die Keramik des Isolators 124 integriert und umfasst dabei einen heizenden Bereich 134 sowie einen Zuleitungsbereich 132. Das Heizelement 130 wird durch zwei Zuleitungen 140, 142 elektrisch kontaktiert. Das Heizelement 130 ist vorzugsweise in einer ähnlichen Form ausgeführt wie das Heizelement 45 der Figuren 1 und 2.

Weiterhin weist der Sensor gemäß Fig. 4 anstatt von Masseelektroden 121 ein metallisches Schutzrohr 40 auf, das vergleichbar zu den in den Figuren 1 und 2 abgebildeten Schutzrohren ausgebildet ist und vorzugsweise ein Metallplättchen 54 als Fangkorb für elektrische Überschläge aufweist. Das metallische Schutzrohr 40 bzw. das Metallplättchen 54 fungieren als Gegenelektrode zu der Mittelelektrode 122.

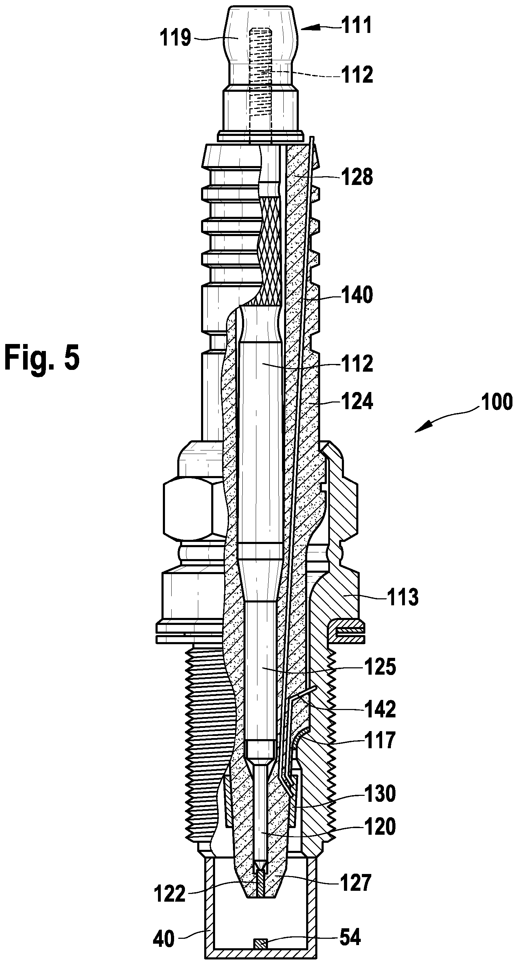

In Figur 5 ist eine Variante des in Figur 4 dargestellten Sensors abgebildet, wobei gleiche Bezugszeichen gleiche Bauteilkomponenten bezeichnen wie in den Figuren 3 und 4.

Hierbei ist das Heizelement 130 vorzugsweise zylinderförmig um die Keramik des Isolators in dessen brennraumseitigem Bereich 127 herum angeordnet und dient der Beheizung der Elektroden 121, 122. Dabei wird das Heizelement 130 insbesondere durch Tampon- oder Transferdruck auf die Außenfläche des brennraumseitigen Bereiches 127 des Isolators 124 aufgebracht. Während eine der Zuleitungen 142 mit dem Gehäuse 113 in Kontakt steht und somit auf Masse gelegt ist, ist die weitere Zuleitung 140 aus der Keramik des Isolators 124 an dessen anschlussseitigem Ende 128 herausgeführt.

## Patentansprüche

1. Sensor zur Bestimmung der Konzentration von Partikeln in Gasgemischen, insbesondere Rußsensor, mit einem von einem metallischen Gehäuse (11, 113) umgebenen keramischen Sensorkörper (13, 124) welcher als sauerstoffionenleitendes Festelektrolytmaterial ausgeführt ist, und mit einer ersten und einer zweiten Messelektrode (50, 54), wobei die zweite Messelektrode (54) an dem metallischen Gehäuse (40, 113) des Sensors angebracht ist oder wobei das metallische Gehäuse des Sensors (40) als zweite Messelektrode (54) ausgebildet ist, wobei die erste
Messelektrode (50) zumindest weitgehend in den keramischen Sensorkörper (13, 124) integriert ist, wobei auf dem keramischen Sensorkörper (13) zusätzlich eine Referenzelektrode (58) aufgebracht ist, die einem Referenzgas ausgesetzt ist und auf dem keramischen Sensorkörper (13) zusätzlich eine dritte Messelektrode (56) aufgebracht ist, die zusammen mit der Referenzelektrode (58) eine elektrochemische Nernstzelle zur Bestimmung von gasförmigen Bestandteilen des Gasgemischs bildet.

2. Sensor nach Anspruch 1 oder 2, **dadurch gekennzeichnet, dass** der keramische Sensorkörper (13, 124) Aluminiumoxid und/oder Erdalkalioxide enthält.

3. Sensor nach einem der vorhergehenden Ansprüche, **dadurch gekennzeichnet, dass** der keramische Sensorkörper (13, 124) eine Vertiefung aufweist, in die ein Heizelement (45, 130) eingeführt ist.

4. Sensor nach einem der vorhergehenden Ansprüche, **dadurch gekennzeichnet, dass** der keramische Sensorkörper (13, 124) rotationssymmetrisch ausgeführt ist.

5. Verfahren zur Bestimmung von Partikeln in einem Gasgemisch, mit einem Sensor (10) gemäß einem der vorangehenden Ansprüche, **dadurch gekennzeichnet, dass** in einem ersten Zeitraum zwischen der ersten und der zweiten Messelektrode (50, 54) eine Hochspannung angelegt wird und eine Anzahl von Entladungen pro Zeiteinheit als Maß für die Partikelkonzentration ermittelt wird und dass in einem zweiten Zeitraum der Sensor als Gassensor betrieben wird, indem eine Spannung zwischen der dritten Messelektrode (56) und der Referenzelektrode (58) bestimmt wird.

## Claims

1. Sensor for determining the concentration of particles in gas mixtures, especially a particulate sensor, comprising a ceramic sensor body (13, 124), which is surrounded by a metallic housing (11, 113) and is in the form of an oxygen-ion-conducting solid electrolyte material, and comprising a first and a second measuring electrode (50, 54), the second measuring electrode (54) being attached to the metallic housing (40, 113) of the sensor or the metallic housing of the sensor (40) being formed as a second measuring electrode (54), the first measuring electrode (50) being at least largely integrated in the ceramic sensor body (13, 124), wherein a reference electrode (58), which is exposed to a reference gas, is additionally provided on the ceramic sensor body (13) and a third measuring electrode (56), which together with the reference electrode (58) forms an electrochemical Nernst cell for determining the gaseous constituents of the gas mixture, is additionally provided on the ceramic sensor body (13).

2. Sensor according to Claim 1 or 2, **characterized in that** the ceramic sensor body (13, 124) contains aluminium oxide and/or alkaline earth oxides.

3. Sensor according to one of the preceding claims, **characterized in that** the ceramic sensor body (13, 124) has a depression in which a heating element (45, 130) is inserted.

4. Sensor according to one of the preceding claims, **characterized in that** the ceramic sensor body (13, 124) is formed rotationally symmetrically.

5. Method for determining particles in a gas mixture with a sensor (10) according to one of the preceding claims, **characterized in that**, in a first time period, a high voltage is applied between the first and second measuring electrodes (50, 54) and a number of discharges per unit of time is determined as a measure of the particle concentration and **in that**, in a second time period, the sensor is operated as a gas sensor, by a voltage between the third measuring electrode (56) and the reference electrode (58) being determined.

## Revendications

1. Détecteur servant à déterminer la concentration de particules dans des mélanges gazeux, notamment détecteur de suie, comprenant un corps de détecteur (13, 124) en céramique entouré par un boîtier métallique (11, 113), lequel est réalisé sous la forme d'un matériau d'électrolyte solide conduisant les ions d'oxygène, et comprenant une première et une deuxième électrode de mesure (50, 54), la deuxième électrode de mesure (54) étant montée sur le boîtier métallique (40, 113) du détecteur et le boîtier métallique du détecteur (40) étant réalisé sous la forme d'une deuxième électrode de mesure (54), la première électrode de mesure (50) étant au moins en grande partie intégrée dans le corps de détecteur (13, 124) en céramique, une électrode de référence (58) étant en outre appliquée sur le corps de détecteur (13) en céramique, laquelle est exposée à un gaz de référence, et une troisième électrode de mesure (56) étant en plus appliquée sur le corps de détecteur (13) en céramique, laquelle forme, conjointement avec l'électrode de référence (58), une cellule de Nernst électrochimique destinée à déterminer les composants gazeux du mélange gazeux.

2. Détecteur selon la revendication 1 ou 2, **caractérisé en ce que** le corps de détecteur (13, 124) en céramique contient de l'oxyde d'aluminium et/ou de l'oxyde d'alcalino-terreux.

3. Détecteur selon l'une des revendications précédentes, **caractérisé en ce que** le corps de détecteur (13, 124) en céramique possède un creux dans lequel est introduit un élément chauffant (45, 130).

4. Détecteur selon l'une des revendications précédentes, **caractérisé en ce que** le corps de détecteur (13, 124) en céramique est réalisé en symétrie de rotation.

5. Procédé de détermination de particules dans un mélange gazeux avec un détecteur (10) selon l'une des revendications précédentes, **caractérisé en ce que** dans une première période, une haute tension est appliquée entre la première et la deuxième électrode de mesure (50, 54) et un nombre de décharges par unité de temps est déterminé en tant que mesure de la concentration de particules, et **en ce que** dans une deuxième période, le détecteur fonctionne comme un détecteur de gaz déterminant une tension entre la troisième électrode de mesure (56) et l'électrode de référence (58).
